# EUROPEAN PATENT APPLICATION

(11) **EP 1 954 017 A1**
(43) Date of publication of application: **06.08.2008**
(21) Application number: 07101590.3
(22) Date of filing: 01.02.2007
(51) Int. Cl.: H04M 3/42, G06F 17/28, H04Q 3/00

(54) **System for the simultaneous and automatic multilingual translation of a telephone conversation between two or more users**

(71) Applicant: Biucchi, Sergio, 21049 Tradate (IT); Mantovani, Marco, 6833 Vacallo (CH); Biucchi, Gabriele, 21049 Tradate (IT)
(72) Inventor: Biucchi, Sergio, 21049 Tradate (IT); Mantovani, Marco, 6833 Vacallo (CH); Biucchi, Gabriele, 21049 Tradate (IT)
(74) Representative: Borsano, Corrado

(57) **Abstract**

A system for the simultaneous and automatic multilingual translation of a telephone conversation between two or more users is described, comprising:
- a remote server (B) comprising means for translating in real time the conversation between two or more interlocutors communicating in different languages;
- two or more mobile or fixed terminals or hand-held computers (A, C) connecting to said server through a network, for example the Internet, located in different positions or in the same environment, each of which is used by a different iterlocutor to support said conversation of a simultaneous type.

## Description

The present invention relates to a system for the simultaneous and automatic multilingual translation of a telephone conversation between two or more users.

The present invention meets the primary need to break the world language barriers through a specific technologic process enabling both mobile and fixed telephones to communicate with a server referred to as "language inter-phone" which is able to virtually translate in real time a conversation between two or more speakers communicating in different languages.

The system differs from similar projects of real-time speech-to-speech translation because the users only need a mobile or fixed telephone, or a hand-held computer connected to the Internet or other communication network. The whole software required for the operation of the system is installed on an external server transparent to the user.

It is an object of the present invention to provide a system for the simultaneous and automatic multilingual translation of a telephone conversation between two or more users, as better described in the claims forming an integral part of the present description.

Further objects and advantages of the present invention will become apparent from the following detailed description of an exemplary embodiment of the same (and of its variations) and from the accompanying drawings provided by way of purely non-limitative example, in which:
Figure 1 depicts the MOBILE TELEPHONE/DEDICATED SERVER system assembly for the simultaneous and automatic multilingual translation of a telephone conversation between two or more users which is the object of the invention;
Figure 2 depicts the MOBILE TELEPHONE/DEDICATED SERVER system assembly with the display reading specification appended;
Figure 3 depicts the Server of the system.

It is the object of the present invention to provide a system which contemplates a specific technologic process enabling the mobile telephones to communicate with a server referred to as "language inter-phone" which is able to practically translate in real time a conversation between two or more interlocutors communicating in different languages; especially each individual can communicate in his/her first language, both during his/her vocal emission, and during the listening of the vocal emission by the other individual, who instead will speak in his/her first language.

In the system which is the object of the invention, the users only need a mobile telephone or a hand-held computer connected to the Internet or other communication network. The whole software required for the operation of the system is installed on an external server transparent to the user.

In practice, a user can speak over the mobile telephone in Italian, while the other one is listening to the same sentence pronounced in another language, for example in English, and regardless of the used telephone carrier. In case of physical presence of two speakers around the same working desk, the process proves to be similar using for example the speakerphones of the same mobile telephones.

Therefore, the system consists in the real-time translation of the communication between two individuals speaking different languages through an online system by means of mobile telephones or hand-held computers connected through the Internet or other communication network.

Each individual connects through a mobile telephone or hand-held computer to a remote server on which is installed a software of real-time speech-to-speech translation for several different languages. The individuals instantly communicate with each other, each in his/her first language, routing the communication over the remote server. The two individuals will thus communicate as smoothly as possible, each in his/her native language. The whole software required for the operation of the system will be installed on the external server in a transparent manner to the user.

A translation system of the known type, for example the one referred to in the art as "Warnig translator", may be used.

Individual A connects to the server with his/her mobile telephone or hand-held computer through the Internet or other circuit selecting his/her first language. Also individual B connects to the server and selects his/her first language. The server will connect point-to-point the two individuals. Individual A will speak in his/her first language and the server will simultaneously translate into the language of individual B, transmitting the spoken translation to him/her. Likewise, individual B will talk to individual A in his/her first language and the server will provide the translation to individual A. An immediate conversation between two individuals speaking different languages will thus be generated.

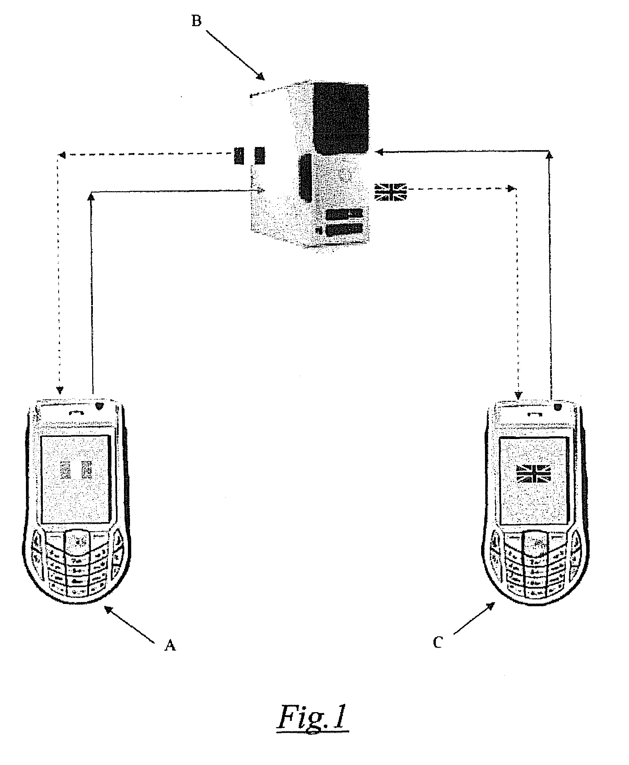

Figure 1 shows:
A) Transmitting and/or receiving mobile telephone with selected language (e.g. Italian) for the simultaneous and automatic vocal translation.
B) Server referred to as *"Language Interphone"* which is able to automatically translate and recognise several languages.
C) Receiving and/or transmitting mobile telephone with selected language (e.g. English) for the simultaneous and automatic vocal translation.

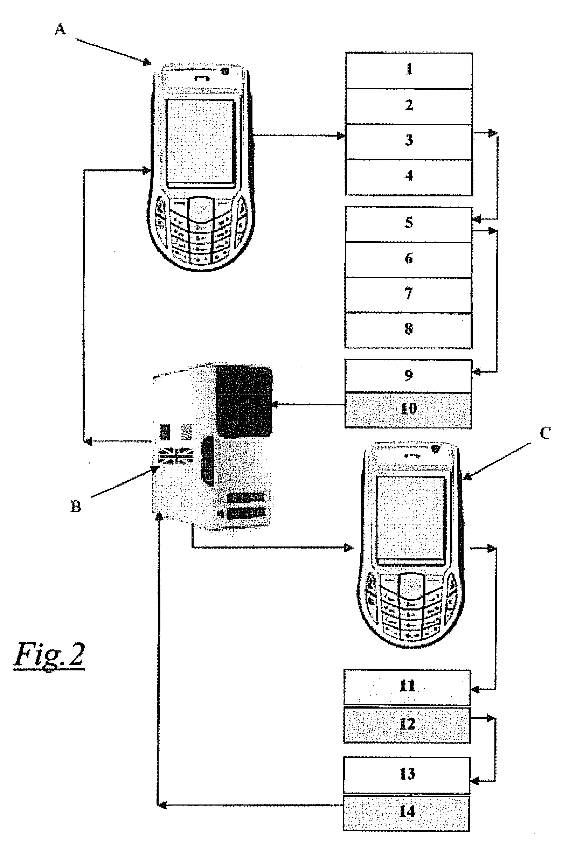

Figure 2 shows:
A) The mobile telephone of figure 1 in which a part of software is available, which includes a system, of a type known per se, for selecting functions at different levels, with displaying on a Display.
   For example during transmission, as a first level of selection:
   1) Lists
   2) Messages
   3) Translator
   4) Sms
   As a second level of selection: a selection of pairs of available languages for a simultaneous translation, for example:
   5) Italian English / English Italian
   6) Italian French/ French Italian
   7) Italian German / German Italian
   8) Italian Spanish / Spanish Italian
   and also the functions:
   9) Dialling of the telephone number
   10) Sending to the server
B) Server referred to as *"Language Interphone"* which is able to automatically translate and recognise several languages.
C) Mobile telephone as in figure 1 operating similarly to telephone A).
   For example during reception, it includes the following functions of selection:
   11) Warnig translator
   12) OPEN
   13) To answer
   14) GO

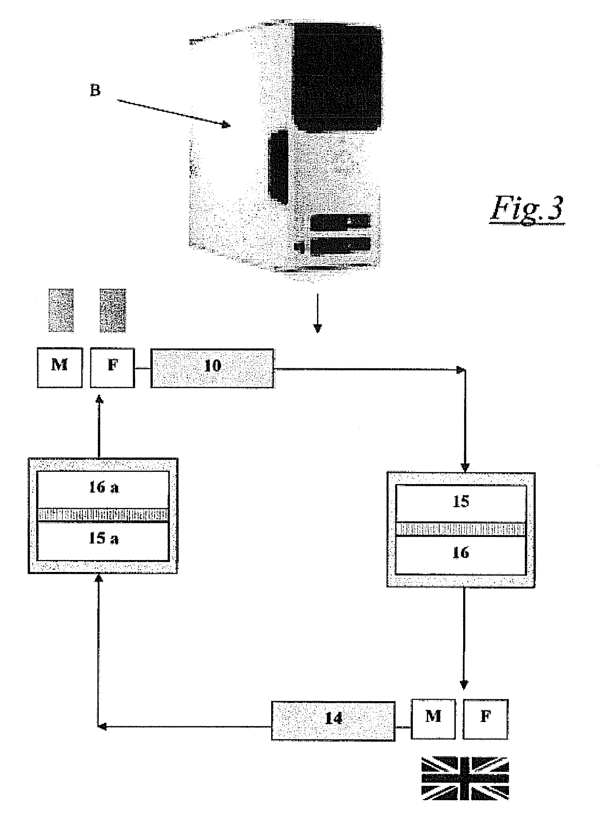

Figure 3 shows:
B) Server referred to as *"Language interphone"* which is able to automatically translate and recognise several languages, which may include the following functions and selections:
   M) Selection for a male voice
   F) Selection for a female voice
   10) Vocal sending to the server
   15) Vocal automatic recorder
   16) Vocal automatic translator
   14) Vocal GO to the server
   15a) Vocal automatic recorder
   16a) Vocal automatic translator

## Claims

1. A system for the simultaneous and automatic multilingual translation of a telephone conversation between two or more users, **characterised in that** it comprises:
- a remote server (B) comprising means for translating in real time the conversation between two or more speakers communicating in different languages;
- two or more mobile or fixed terminals or hand-held computers (A, C) connecting to said server through a network, for example the Internet, located in different positions or in the same environment, each of which is used by a different speaker for supporting said conversation of a simultaneous type.

2. A system according to claim 1, **characterised in that** the remote server has a translation software of the real-time speech-to-speech type installed for several different languages.

3. A system according to claim 1, **characterised in that** said remote server establishes a point-to-point communication between the two or more terminals.

4. A system according to claim 1, **characterised in that** each of said terminals comprises a part of software comprising a system, of a type known per se, for selecting functions at different levels, with displaying on a Display, with which the conversation language is selected.
